(19) Europäisches Patentamt
European Patent Office
Office européen des brevets

(11) **EP 1 782 565 B1**

(12) **EUROPEAN PATENT SPECIFICATION**

(45) Date of publication and mention
of the grant of the patent:
**12.03.2008 Bulletin 2008/11**

(21) Application number: **04764570.0**

(22) Date of filing: **27.08.2004**

(51) Int Cl.:
*H04L 1/06* (2006.01)

(86) International application number:
**PCT/EP2004/009596**

(87) International publication number:
**WO 2006/021228 (02.03.2006 Gazette 2006/09)**

(54) **APPARATUS AND METHOD FOR OBTAINING CYCLIC DELAY DIVERSITY**

VORRICHTUNG UND VERFAHREN ZUM ERHALTEN VON CYCLISCHER VERZÖGERUNGS-DIVERSITY

APPAREIL ET PROCEDE POUR OBTENIR UNE DIVERSITE DE RETARDS CYCLIQUES

(84) Designated Contracting States:
**DE GB**

(43) Date of publication of application:
**09.05.2007 Bulletin 2007/19**

(73) Proprietor: **NTT DoCoMo INC.**
**Chiyoda-ku**
**Tokyo 100-6150 (JP)**

(72) Inventor: **BAUCH, Gerhard**
**80799 Munich (DE)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(56) References cited:
- **HUEBNER A ET AL: "ON SPACE-FREQUENCY CODING USING CYCLIC DELAY DIVERSITY FOR OFDM-BASED TRANSMISSION SYSTEMS" EUROPEAN TRANSACTIONS ON TELECOMMUNICATIONS, AEI, MILANO, IT, vol. 14, no. 6, November 2003 (2003-11), pages 491-500, XP001185697 ISSN: 1124-318X**
- **DAMMANN A ET AL: "Low complex standard conformable antenna diversity techniques for OFDM systems and its application to the DVB-T system" ITG FACHBERICHTE, VDE VERLAG, BERLIN, DE, no. 170, 28 January 2002 (2002-01-28), pages 253-259, XP002255841 ISSN: 0932-6022 cited in the application**
- **DAMMANN A ET AL: "Standard conformable antenna diversity techniques for OFDM and its application to the DVB-T system" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY : IEEE, US, vol. VOL. 5 OF 6, 25 November 2001 (2001-11-25), pages 3100-3105, XP002279223 ISBN: 0-7803-7206-9 cited in the application**

EP 1 782 565 B1

**Description**

In wireless communications, transmit diversity techniques are used in order to mitigate the detrimental effects of fading. A simple transmit diversity technique is delay diversity, where the same signal is transmitted from multiple antennas with different delay. This results in an equivalent single-input channel with increased frequency-selectivity - and therefore increased frequency diversity - compared to the original sub-channels from each transmit to each receive antenna. In orthogonal frequency division multiplex (OFDM), this frequency diversity can be exploited by a forward error correcting decoder. However, introducing additional delay requires a longer guard interval and consequently results in reduced bandwidth efficiency. If the guard interval is not sufficiently long, the additional delay will cause inter-carrier interference. An elegant way to produce increased frequency selectivity without exceeding the guard interval was proposed in A. Dammann and S. Kaiser: Standard conformable antenna diversity techniques for OFDM systems and its application to the DVB-T system, IEEE Globecom, pages 3100-3105, November 2001, A. Dammann and S. Kaiser: Low complex standard conformable antenna diversity techniques for OFDM systems and its application to the DVB-T system, 4th International ITG Conference on Source and Channel Coding, pages 253-259, January 2002, A. Dammann, R. Raulefs, and S. Kaiser: Beamforming in combination with space-time diversity for broadband OFDM systems, IEEE International Conference on Communications (ICC), pages 165-171, April 2002, D. Gore, S. Sandhu, and A. Paulraj. Delay diversity codes for frequency selective channels, International Conference on Communications (ICC), pages 1949-1953. IEEE, April 2002, and in A. Huebner et al: On Space-Frequency Coding Using Cyclic Delay Diversity for OFDM-Based Transmission Systems, European Transactions on Telecommunications, AEI, MILANO, IT, vol. 14, no. 6, November 2003, pp. 491-500 as cyclic delay diversity. Here, the delay is done in a cyclic manner such that the guard interval is not exceeded.

The choice of the cyclic delay is the essential design parameter. In order to allow exploitation of the full spatial diversity, the cyclic delay has to be chosen larger than the maximum channel delay. However, this criterion is not sufficient in terms of maximizing capacity. Furthermore, real world FEC codes have limited constraint length. Therefore, the full spatial diversity should be transformed into frequency diversity of a limited, controllable number of sub-carriers. This can be achieved by choosing large cyclic delays, which are a multiple of 2. Particularly, in a two transmit antenna system with a cyclic delay of $N_s/2$, where $N_s$ is the FFT size of the OFDM modulator, the spatial diversity is transformed into frequency diversity between only two neighbouring sub-carriers. This can be shown to yield optimum frame error rate (FER) e.g. with a standard convolutional code of rate $R \le 1/2$. Furthermore, this choice of the cyclic delays is advantageous for channel estimation or if differential modulation is applied. However, for code rates higher than $R = 1/2$ this choice of the cyclic delay turns out to be sub-optimum.

In the following, cyclic delay diversity will be described in a context of OFDM systems.

We consider a multiple-input-multiple-output (MIMO) channel with $n_T$ transmit antennas and $n_R$ receive antennas. The impulse response from transmit antenna n to receive antenna m at time t is given by the 1 x $N_s$ vector

$$h_t^{(nm)} = \left[ h_t^{(nm)}(0), h_t^{(nm)}(1), \ldots, h_t^{(nm)}(D), 0, \ldots, 0 \right] \qquad (1)$$

where D is the maximum memory of a sub-channel from a transmit to a receive antenna.

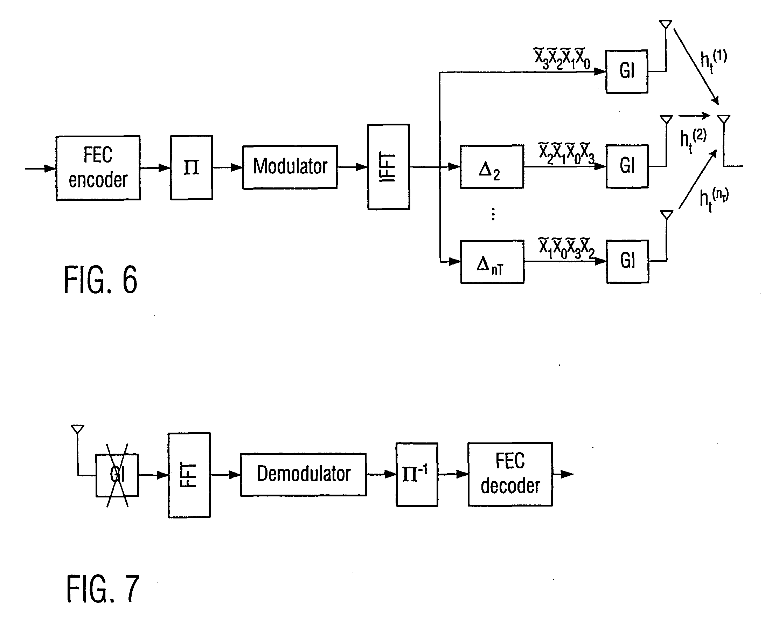

The principle of cyclic delay diversity is depicted in Figs. 6 and 7. The data is encoded by a forward error correcting (FEC) encoder. After an optional interleaver $\Pi$, the code bits are modulated e.g. on QAM or PSK symbols.

OFDM is implemented using the inverse fast Fourier transform (IFFT) of size $N_s$, where $N_s$ is the number of sub-carriers. The output symbols of the IFFT are denoted $\tilde{x}_t$, $t = 0, ..., N_s - 1$. Each antenna introduces a different cyclic delay $\Delta_n$, $n = 1, ..., n_T$, i.e. the transmit symbol from antenna n at time t is given by

$$x_t^{(n)} = \tilde{x}_{(t-\Delta_n) \bmod N_s}, t = 0, \ldots, N_s - 1, n = 1, \ldots, n_T \qquad (2)$$

Before transmission, a cyclic guard interval (GI) is included at each transmit antenna as it is usually done in OFDM.

The system is equivalent to transmission of the sequence $\tilde{x} = {}_L x_0, ..., x_{Ns-1}{}^\rfloor$ over a frequency-selective channel with one transmit antenna and impulse response

$$h_{equ,t}^{(1m)}(d) \; = \; \sum_{n=1}^{n_T} h_t^{(nm)}((d \, - \, \Delta_n) \bmod N_s) \qquad (4)$$

The receiver is a standard OFDM receiver, which removes the guard interval and performs the FFT before demodulation and decoding.

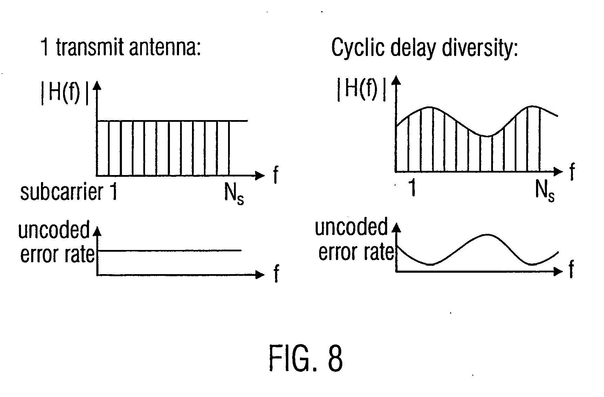

Basically, cyclic delay diversity has transformed the multiple-input multiple-output (MIMO) channel into a single-input multiple-output (SIMO) channel with increased frequency-selectivity, i.e. the spatial diversity is transformed to frequency diversity. The effect is illuminated in Fig. 8. In a flat fading channel as depicted on the left hand side of Fig. 8, the bit error rate (BER) will be the same on each sub-carrier. Cyclic delay diversity transforms the channel into a frequency-selective channel as depicted on the right hand side of Fig. 8. The average BER for encoded transmission will be the same as in the flat fading channel. However, the BER is not constant over the sub-carriers. An outer FEC decoder can pick up the available frequency diversity. Cyclic delay diversity requires an FEC decoder in order to exploit the diversity.

The resulting channel coefficient of the d-th sub-carrier at receive antenna $m$ in the $k$-th OFDM symbol is given by

$$H_k^{(m)}(d) \; = \; \sum_{n=1}^{n_T} H_k^{(nm)}(d)e^{j2\pi d\Delta_n/N_s}, \; d \, = \, 0, \dots, N_s - 1, m \, = \, 1, \dots, n_R \qquad (5)$$

where

$$H_k^{(nm)} \; = \; \left[ H_k^{(nm)}(0), \dots, H_k^{(nm)}(N_s) \right] \qquad (6)$$

is the FFT of the impulse response (1).

It has been shown in G. Bauch and J S. Malik. Orthogonal frequency division multiple access with cyclic delay diversity. In ITG Workshop on Smart Antennas, March 2004, that the full spatial diversity can only be exploited if the cyclic delays meet

$$\Delta_n \; > \; \Delta_{n-1} + D \qquad (7)$$

where $\Delta_n$ is normalized to the FFT sample spacing and $D$ is the maximum memory of a sub-channel from a transmit to a receive antenna. This condition is necessary but not sufficient for optimum performance. One possibility is to choose the cyclic delay according to

$$\Delta_n \; > \; \Delta_{n-1} + G + 1 \qquad (8)$$

where $G$ is the length of the guard interval. However, it has been shown in G. Bauch and J S. Malik: Orthogonal frequency division multiple access with cyclic delay diversity, ITG Workshop on Smart Antennas, March 2004, in G. Bauch: Multi-stream differential modulation for cyclic delay diversity in OFDM, IEEE International Conference on Communications (ICC), June 2004, G. Auer: Channel estimation for OFDM with cyclic delay diversity, IEEE International Symposium on Personal, Indoor and Mobile Radio Communications (PIMRC), September 2004, that it can be beneficial in terms of FER performance, channel estimation or application of differential modulation, to choose the maximum possible cyclic delays. This would lead to choosing the cyclic delays according to

$$\Delta_n = \frac{N_s(n-1)}{n_T} = \frac{N_s}{n_T} + \Delta_{n-1} \qquad (9)$$

However, it turns out that this choice is only optimum for FEC code rates $R \leq 1/2$. For higher code rates, lower cyclic delays are optimum.

This can be explained as follows: If the original channel was frequency flat and the cyclic delay is a multiple of 2, the frequency domain channel coefficients of the effective channel according to (5) can take a limited number of distinct states. E.g. in case of $n_T = 2$ transmit antennas and a cyclic delay of $\Delta_2 = N_s/2$, the term $e^{j2\pi d\Delta_n/N_s}$ can take 2 different states:

$$H_k^{(m)}(d) = H_k^{(1m)}(d) + H_k^{(2m)}(d), \ d \text{ even} \qquad (10)$$

$$H_k^{(m)}(d) = H_k^{(1m)}(d) - H_k^{(2m)}(d), \ d \text{ odd}. \qquad (11)$$

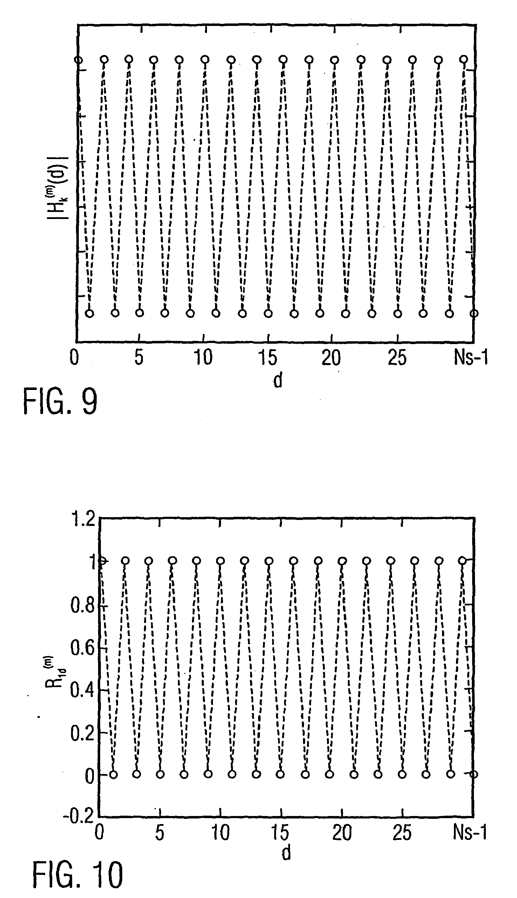

An example for a flat fading MIMO channel is depicted in Fig. 9. Given the correlation matrix

$$R^{(m)} = E\left\{H_k^{(m)H}H_k^{(m)}\right\} \qquad (12)$$

the correlation function $R_{1d}^{(m)}$ for the first sub-carrier is plotted in Fig. 10. It can be seen that the channel coefficient of every other sub-carrier is identical whereas neighbouring sub-carriers are uncorrelated. The spatial diversity is transformed into frequency diversity between neighbouring sub-carriers.

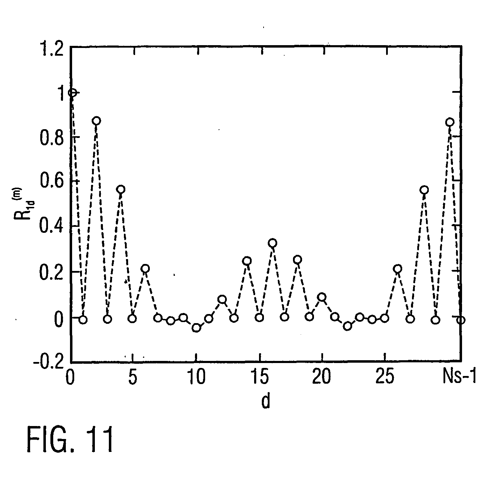

We obtain similar results for a frequency-selective channel. The correlation function is depicted in Fig. 11 for a channel with $D + 1 = 3$ independently fading taps $h_t^{(nm)}(d)$ with equal mean power from each transmit to each receive antenna. Due to the frequency-selectivity of the original channel, the channel taps $H_k^{(m)}(d)$ of every other sub-carrier are not identical anymore.

It is the object of the present invention to provide a simple cyclic delay diversity scheme with an increased bandwidth efficiency.

This object is achieved by an apparatus for generating $n_T$ output sequences according to claim 1 or by an apparatus for generating an output sequence from $n_T$ output sequences according to claim 6 or by a method for generating $n_T$ output sequences from an input sequence according to claim 8 or by a method for generating an output sequence from $n_T$ output sequences according to claim 9 or by a computer program according to claim 11.

The present invention is based on the finding that a bandwidth efficiency can be increased when the cyclic delays associated with an employed cyclic delay diversity scheme are chosen such that a greatest common divisor dividing any two cyclic delays associated with the cyclic delay diversity scheme is equal to 1.

When using a cyclic delay diversity scheme, e.g. $n_T$-1 copies of e.g. an input sequence are shifted by a different shift number being associated with a respective copy and determining a number of values the input sequence is to be cyclically shifted by, wherein a first output sequence may correspond to a unshifted version of the input sequence. In accordance with the present invention, the shift numbers to be used are chosen only from a set of shift numbers comprising only shift numbers having the property, that a greatest common divisor dividing any two of shift numbers is equal to 1, wherein a smallest shift number in the set of allowable shift numbers is greater than 1 so that preferably large delays are introduced.

For example, the set of shift numbers comprises the following numbers: 5, 7, 9, 13. Although 9 is not absolutely prime, it is relatively prime to the other shift numbers in the set of the shift numbers since the greatest common divisor is equal to 1.

In accordance with the present invention, preferably the greatest shift numbers fulfilling the inventive constraint are chosen from the set of shift numbers.

In accordance with the present invention, the shift numbers to be used for cyclically shifting can also be absolute prime numbers, since a greatest common divisor for prime numbers is also equal to 1. Moreover, shift numbers are excluded from the allowable shift numbers when a greatest common divisor between two shift numbers is greater than 1. According to the inventive constraint, only shift numbers are applied for introducing cyclic delays diversity, such that a greatest common divisor being shared by any two shift numbers used for introducing cyclic delay diversity is not greater than 1, which also is reflected by the above embodiments.

Further embodiments of the present invention are described with respect to the following figures, in which:

Fig. 1        shows a block diagram of an apparatus for generating $n_T$ output sequences according to an embodiment of the present invention;

Fig. 2a-c     demonstrates a performance of the inventive cyclic delay diversity approach;

Fig. 3a-b     demonstrates a performance of the inventive cyclic delay diversity approach;

Fig. 4        shows a transmit apparatus according to an embodiment of the present invention;

Fig. 5        shows preferable parameters used for determining the inventive cyclic delays;

Fig. 6        shows a block diagram of a transmitter using cyclic delay diversity in coded OFDM;

Fig. 7        shows a block diagram of a receiver using cyclic delay diversity in coded OFDM;

Fig. 8        demonstrates the transformation of channel by cyclic delay diversity;

Fig. 9        shows an embodiment of a channel frequency response resulting when cyclic delay diversity is used;

Fig. 10       shows a correlation function for an embodiment of a cyclic delay diversity; and

Fig. 11       shows a correlation function for a further embodiment of cyclic delay diversity.

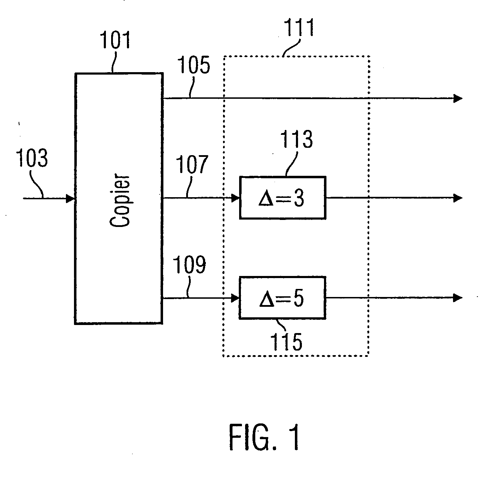

Fig. 1 shows a block diagram of an apparatus for generating $n_T$ output sequences from an input sequence for obtaining cyclic delay diversity. For example, the output sequences are to be transmitted by $n_T$ transmit points, each transmit point including a transmit antenna. In Fig. 1, by the way of example only, case $n_T=3$ is considered.

The apparatus comprises a copier 101 having an input 103 and a plurality of outputs. In Fig. 1, by the way of example only, three outputs are considered, a first output 105, a second output 107 and a third output 109.

The outputs of the copier 101 are coupled to inputs of means 111 for cyclically shifting $n_T-1$ copies of the input sequence being provided via the input 103 to the copier 101 with respect to a first copy of the input sequence being provided via the first output 105 or with respect to the input sequence to obtain $n_T-1$ output sequences.

The means 111 for cyclically shifting comprises a cyclic shift element 113 coupled to an output of the copier 107 and having an output, and a cyclic delay element 115 coupled to the third output 109 of the copier 109 and having an output.

For example, the means 111 for cyclically shifting comprises $n_T-1$ cyclic shift elements, each cyclic shift element being configured for cyclically shifting a copy of the input sequence, the copy being provided via an associated output of the copier 101.

Correspondingly, the copier 101 is configured for generating $n_T$ copies of the input sequence, wherein a first copy of the input sequence corresponds to a first output sequence, wherein $n_T$ is equal to or greater than 3.

The first copy of the input sequence is, as is depicted in Fig. 1, directly provided as the first output sequence without being cyclically shifted. However, in accordance with a further aspect of the present invention, the first copy of the input sequence may also be cyclically shifted by the means for cyclically shifting, wherein a shift number determining a number of values the first copy of the input sequence is to be shifted by is chosen from an allowable set of shift numbers, as will be described above.

In accordance with the present invention, the means 111 for cyclically shifting is configured for cyclically shifting each copy of the $n_T-1$ copies of the input sequence by a different shift number from a set of $n_T-1$ shift numbers, each shift number in the set of shift numbers determining a different number of values a copy of the input sequence is to be cyclically shifted by, wherein a smallest shift number in the set of shift numbers comprising $n_T$-1 shift numbers is greater than 1, and wherein a greatest common divisor dividing any two shift numbers in the set of shift numbers is equal to 1.

In other words, the allowable shift numbers being comprised by the set of shift numbers are chosen such that the greatest common divisor being shared by any two shift numbers is not greater than 1. For example, the set of shift numbers may comprise the following numbers: 3, 5, 8. However, in this case, the shift numbers 4 and 9 are excluded since a greatest common divisor between 4 and 8 is 2 and a greatest common divisor between 3 and 9 is 3.

In accordance with the present invention, the first copy of the input sequence being provided by the first output 105, by way of example only, may also be shifted by a shift number being chosen from a set of allowable shift numbers comprising e.g. $n_T$ shift numbers, wherein a greatest common divisor dividing any two shift numbers in this set of shift numbers is equal to 1.

As has been mentioned above, the smallest shift number in the set of shift numbers is greater than or equal to 3 in order to ensure that the cyclic delays are sufficiently large. Moreover, the shift numbers in the set of shift numbers may be prime numbers. In this case, the inventive constraint, namely that the greatest common divisor being shared by any two shift numbers not greater than 1, is automatically fulfilled.

For example, the $n_T$ output sequences are to be transmitted by $n_T$ transmitting points through $n_T$ communication channels in accordance with a cyclic delay diversity scheme.

Due to cyclic delay diversity, the $n_T$ communication channels are represented by an effective channel being obtained due to the cyclic delay diversity scheme.

As will be shown later, it has been found that a capacity of the effective channel depends on the resulting cyclic delay diversity scheme, i.e. on the numbers of values, the copies of the input sequence are to be shifted by.

In order to increase the capacity of the effective channel, which is a possible transmission condition, the inventive apparatus may further comprise means for determining a number of values each copy of the input sequence is to be shifted by such that the capacity of the effective channel is increased when compared to another number of values. For example, the means for determining is configured for determining a certain number from a set of numbers, wherein a smallest number in the set of numbers is equal to or greater than 3 and wherein a greatest common divisor dividing any two numbers (shift numbers) in the set of numbers is equal to 1. In other words, the means for determining the numbers is configured to refer only to shift numbers fulfilling the inventive criterion mentioned above in order to find the shift numbers such that the capacity of the effective channel is increased.

In accordance with the present invention, the means for determining the shift numbers may be configured for performing an analysis by synthesis approach in order to find the required combination of shift numbers. For example, the means for determining is configured for determining a first set of shift numbers for filling the inventive criterion, to calculate a capacity of the effective channel resulting when using the shift numbers for obtaining cyclic delay diversity, for determining further set of shift numbers, for calculating a further capacity of a resulting effective channel and for comparing the capacity and the further capacity in order to determine which set of shift numbers is to be chosen to obtained an increased capacity. In order to calculate the capacity, the means for determining may refer to the inventive channel capacity formula which will be described later.

Since cyclic delay diversity can also be applied at a receiver, the inventive concept may also be used in a receiver for obtaining receiver-sided cyclic delay diversity, which is due to a linearity of the cyclic delay diversity scheme.

The present invention further provides an apparatus for generating an output sequence from $n_T$ input sequences for obtaining cyclic delay diversity. The input sequences may be e.g. versions of a transmit sequence being receivable by different receiving points, each receiving point comprising a receive antenna.

The apparatus comprises means for cyclically shifting $n_T$-1 input sequences from $n_T$ input sequences, wherein a first input sequence may be provided without being shifted, by way of example only.

The apparatus further comprises an adder for adding the $n_T$ cyclically shifted input sequences and the first input sequence to obtain the output sequence. In accordance with the present invention, the means for cyclically shifting has exactly the same functionality as the means for cyclically shifting described with respect to the embodiment of Fig. 1.

The present invention further provides a receiver apparatus comprising $n_T$ receiving points for providing $n_T$ input sequences, each input sequence being a receivable version of the transmit sequence being receivable by a different receiving point, the receive apparatus preferably comprising the above-described apparatus for generating an output sequence from the $n_T$ input sequence.

In the following, the inventive concept will be described in more detail.

Referring again to the embodiments of Figs. 9 and 10, neighbouring sub-carriers are still uncorrelated. Therefore, spatial diversity of the original channel is obtained from neighbouring sub-carriers whereas frequency diversity of the original channel can be obtained by coding through even and odd numbered sub-carriers.

If we choose a cyclic delay of e.g. $\Delta_2 = \frac{N_s}{4}$, the term $e^{j2\pi d\Delta_n/N_s}$ in (5) can take four different values, i.e. in a flat channel we observe four different channel states of the resulting frequency domain channel $H_k^{(m)}$. The spatial

diversity is transformed into frequency diversity over four neighbouring sub-carriers. For $\Delta_2 = \frac{N_s}{8}$, we obtain 8 different states etc.

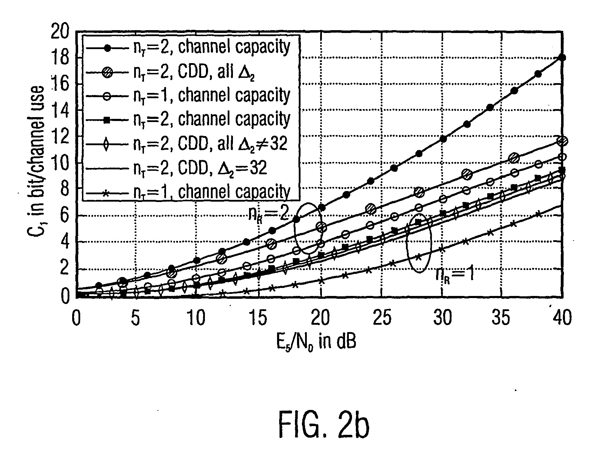

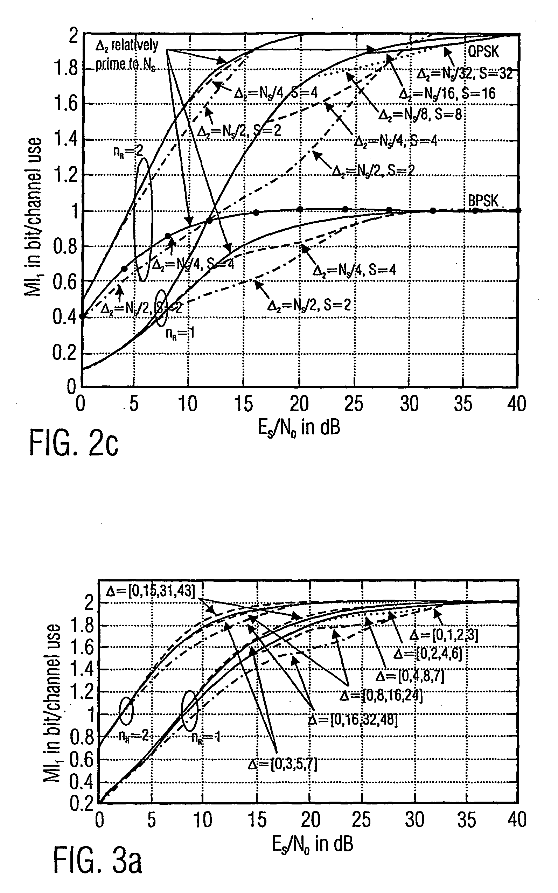

In the sequel, we denote the number of different channel states, which would result in a frequency flat channel by S. Fig. 2c shows the capacity for different values of the cyclic delay, which result in different values of $S$ for $n_T = 2$ transmit antennas. Note that the same values of $S$ can also be obtained by other cyclic delays. The exact values of those cyclic delays depend on the number $N_s$ of sub-carriers. It turns out, that the optimality of the cyclic delay depends on the code rate. It can be seen that for higher code rates a higher value of $S$ is required for optimum performance. Interestingly, for very high code rates, $S = 2$ becomes optimum again.

An intuitive explanation is as follows: Consider a systematic code of rate $R$ and a cyclic delay, which leads to $S = 2$, e.g. $\Delta = N_s/2$. Since there are only 2 different channel states, it can happen that every other sub-carrier is in a very bad state and the symbols transmitted on those sub-carriers are essentially punctured. Now, if the code rate is higher than 1/2, i.e. $R \geq 1/2$, e.g. all parity bits plus some systematic bits would be punctured and the code cannot be detected error free. Similarly, in case of $S = 4$, a systematic code of rate $R > 3/4$ is not suitable.

We observe similar but not that clear behaviour for more transmit antennas. The capacity results for $n_T = 4$ transmit antennas are depicted in Fig. 3a. Here, cyclic delays according to $\Delta_n = \Delta_{n-1} + N_s/4$, i.e. $\Delta = [0,16,32,48]$ are already sub-optimum for code rates $R < 3/4$. However, we still see the characteristic blip at $R = 3/4$, i.e. a mutual information of 1.5 bit/channel use. A good solution with close to optimum performance seems to be to choose the cyclic delays relatively prime, e.g. $\Delta = [0,3,5,7]$. The best performance for $N_s = 64$ was found to be $\Delta = [0,15,31,43]$, which indicates that we should choose large delays which are relatively prime. Even though cyclic delays $[\Delta_1, \Delta_2, \Delta_3, \Delta_4] = [0, N_s/4, N_s/2, 3N_s/2]$, which result in $S = 4$ different channel states are not optimum in terms of capacity, we have shown that they allow to obtain optimum FER for code rates $R \leq 3/4$ for codes with limited constraint length as is disclosed in G. Bauch and J.S. Malik: Parameter optimization, interleaving and multiple access in OFDM with cyclic delay diversity, IEEE Vehicular Technology Conference (VTC), May 2004, G. Bauch and J S. Malik: Orthogonal frequency division multiple access with cyclic delay diversity, ITG Workshop on Smart Antennas, March 2004, and in J.S. Malik: Cyclic delay diversity in OFDM, master thesis, Department of Communications Engineering, TU Munich, October 2003.

Furthermore, those delays are suitable for cyclic delay diversity with differential modulation as shown in G. Bauch. Higher order differential matrix modulation. In IEEE International Symposium on Information Theory (ISIT), June/July 2004.

Note that even though we gave examples only for BPSK and QPSK modulation, we have verified that the aforementioned effects are independent of the particular modulation method.

In the following, the considered channel model will be described

The channel coefficients are assumed to be independent complex Gaussian random variables. The channel is assumed to be constant during transmission of an OFDM symbol such that - in case of a sufficiently long guard interval, no inter-carrier interference occurs. Investigated types of power delay spectra are summarized in Fig. 2ca, where $T_s$ denotes the time domain sample spacing. Additive white Gaussian noise would be added at each receive antenna. The total transmit energy per time slot is denoted $E_s$, i.e. the energy per sub-symbol transmitted from each antenna.

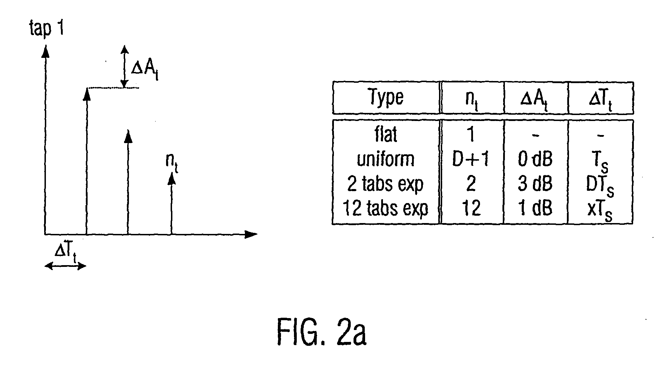

Fig. 2a shows the one% outage capacity for two transmit antennas in a frequency flat channel with Gaussian transmit symbols. For one receive antenna, all cyclic delays yield the same capacity except for a cyclic delay of 32, which shows a slight degradation. For two receive antennas, this effect vanishes. For comparison, we also included the capacity of the channel itself both one and two transmit antennas. In case of one transmit antenna, cyclic delay diversity almost achieves the channel capacity for two transmit antennas and shows a significant diversity advantage over a single transmit antenna system. For two receive antennas there is still a clear diversity gain over a single transmit antenna system. However, since transmit diversity schemes cannot reach the channel capacity in case of multiple receive antennas, there is a degradation compared to the channel capacity for two transmit antennas, which results from the different asymptotic slopes of the capacity curves.

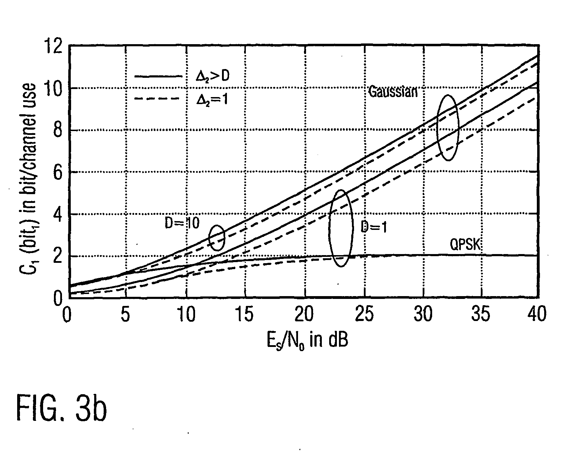

Fig. 3b demonstrates the performance for frequency selective channels for two transmit antennas, where all cyclic delays, which meet $\Delta_2$ greater than $D$ shows similar performance. Fig. 3b also demonstrates that cyclic delays need to be chosen larger than the maximum channel delay. Otherwise, the effective time-domain channel will include non-resolvable taps, which consist of sums of taps from different transmit antennas resulting in reduced diversity level.

The present invention further provides a transmit apparatus comprising a processor for processing an information sequence using a processing scheme to obtain an input sequence and the apparatus for generating a plurality of output sequences from the input sequence to obtain cyclic diversity, as has been described above.

Preferably, the apparatus for generating the plurality of output sequences to be transmitted by a plurality of transmit points, each transmit point including a transmit antenna, comprises a controller for controlling a cyclic shift element in order to adapt a number of values a copy of the cyclic shift element is to be shifted by to the processing scheme comprising e.g. a coding scheme, such that the shift numbers are matched to the coding scheme for increasing efficiency.

In accordance with a further aspect of the present invention, the processor may comprise an encoder for encoding the information sequence using a coding scheme in order to obtain an encoded sequence, a de-multiplexer for demultiplexing the encoded sequence into a number of streams of values in response to a control signal indicating the number of stream of values, for each stream of values, a mapper for mapping groups of streams of values onto symbols according to a mapping scheme, e.g. QAM (QAM = Quadrature Amplitude Modulation), in order to obtain the number of streams of symbols. Furthermore, the transmit apparatus may comprise an assigner for assigning a number of successive symbols of each stream of symbols to a different set of successive sub-carriers in order to obtain a multi-carrier signal in frequency domain.

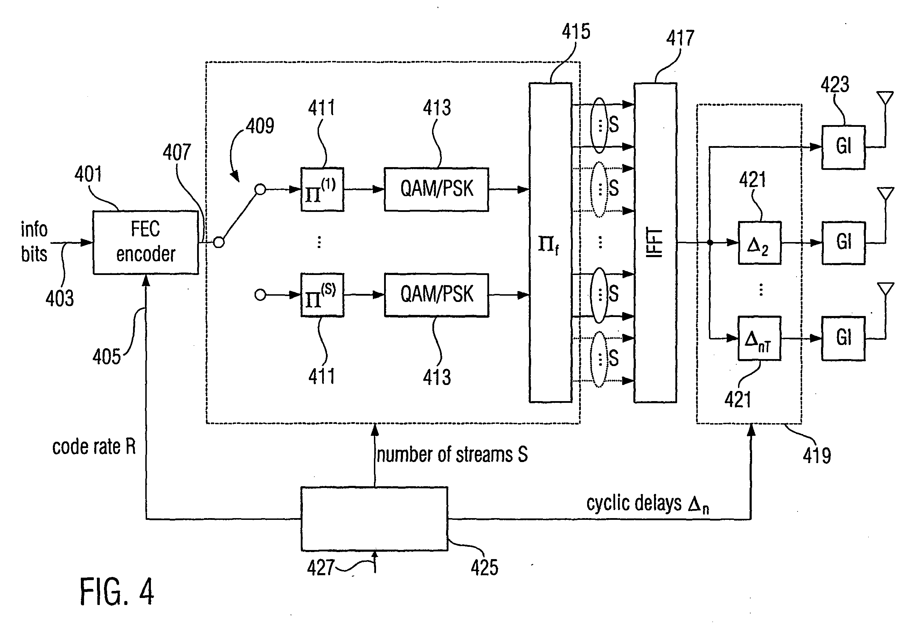

In order to obtain the input sequence to be transmitted, the transmitter may comprise a frequency time transformer, e.g. an inverse Fourier transformer, for transforming the multi-carrier signal to obtain the input sequence, serving as a basis for providing the plurality of output sequences by the inventive apparatus for generating the plurality of output sequences. For example, the controller comprised by the apparatus for generating the plurality of transmit sequences (output sequences) may be configured for providing the control signal to the de-multiplexer indicating the number of streams of values to be provided, wherein the number of streams of values depends on the coding scheme. For example, the number of streams of values is closely related to a code rate resulting when using a certain coding scheme. An embodiment of a transmitter apparatus incorporating the above-mentioned inventive concept is shown in Fig. 4.

The transmitter apparatus of Fig. 4 comprises an encoder 401, for example a FEC encoder (FEC = Forward Error Correction), the encoder 401 having an input 403, a control input 405, and an output 407, the output 407 being coupled to a switch 409, the switch 409 representing the above-mentioned de-multiplexer by way of example only.

The switch 409 has a number of outputs, the number of outputs corresponding to the number of streams $S$ mentioned above, wherein each output is associated with a signal processing path of $S$ signal processing path. Each signalprocessing path comprises an interleaver 411 coupled between the respective output of the switch 409 and a mapper 413. Each mapper 413 has an output, wherein the $S$ output of the mapper 413 is coupled to an assigner 415. The assigner 415 has a plurality of outputs coupled to a plurality of inputs of an IFFT transformer 417 (IFFT = Inverse Fast Fourier Transform). The IFFT transformer has an output coupled to an input of the inventive apparatus 419 for generating the plurality of output sequences (transmit sequences).

The inventive apparatus 419 comprises a copier for providing a plurality of copies of the input sequence provided by the IFFT transformer 419, wherein, the copier is represented by a node. Except for a first copy of the input sequence, all other copies of the input sequence are shifted using a controllable cyclic shift element 421 being comprised by the inventive apparatus 419.

Each output sequence is provided to a guard insertion interval 423 (GI) in order to insert a guard interval, for example, a cyclic prefix according to an OFDM transmission scheme. Each guard interval element 423 is associated with an antenna, as is depicted in Fig. 4 for the sake of completeness.

The apparatus shown in Fig. 4 further comprises a rate adaptation unit 425, the rate adaptation unit 425 comprising the functionality of the inventive controller being described above.

In particular, as is depicted in Fig. 4, the rate adaptation unit 425 may be configured for controlling the encoder 405 in order to determine a coding scheme to be used by the encoder 405, the coding scheme being associated with a code rate $R$, and/or for controlling the switch 409 in order to determine the number of streams $S$, and/or for controlling the cyclic delays, i.e. the number of values the copies of the input sequence are to be shifted by.

The encoder 402 may be configured for generating a control signal for controlling the encoder 401 and/or for controlling the switch 409 and/or for controlling the cyclic delay elements 421 in dependence on a transmission condition comprising e.g. a channel state information (CSI), quality of service (QOS) or other transmission conditions, wherein the transmission condition may be provided to the rate adaptation unit 425 via a control input 427 from a further control entity comprised by the inventive transmitter, the further entity being configured e.g. for controlling the whole transmission process.

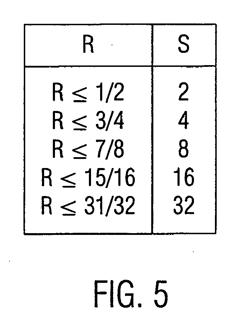

As is shown in Fig. 5 the information bits are encoded by the encoder of a forward error control (FEC) code. The code bits are de-multiplexed into $S$ streams. Within each stream optional interleaving is performed by a set of bit-interleavers $\Pi^{(s)}$. Then, the interleaved code bits are mapped on transmit symbols according to the mapping rule of a digital modulation scheme, e.g. QAM, PSK, or a differential modulation scheme. The transmit symbols are mapped on sub-carriers of a multi-carrier modulation scheme such as OFDM by the sub-carrier assignment unit $\Pi_f$. The OFDM modulation is performed by the inverse fast Fourier transform (IFFT). The resulting time domain samples are transmitted simultaneously form $n_T$ antennas, where each antenna n introduces a cyclic delay $\Delta_n$, as explained above.

The code rate $R$ is determined from a rate adaptation unit based on criteria such as current channel state or required quality of service. The rate adaptation unit also determines the cyclic delays $\Delta_n$ and the number $S$ of interleaver streams. For the choice of the cyclic delay and $S$, there are three modes:

Mode 1: Cyclic Delays Independent of Code Rate

The cyclic delays are chosen independent of the code rate. The cyclic delays are chosen according to

$$\Delta_n = \Delta_{n-1} + G \qquad (13)$$

where $G$ is the length of the guard interval GI. The number of streams is preferably $S = 1$.

Mode 2: Relatively Prime Cyclic Delays Independent of Code Rate

The cyclic delays are chosen independent of the code rate. The cyclic delays are chosen such that

$$\Delta_n = \Delta_{n-1} + G \qquad (14)$$

where G is the length of the guard interval GI, and all $\Delta_n$ are relatively prime to each other and to the FFT size $N_s$. Large delays should be preferred. A more relaxed condition is that not all $\Delta_n$ are relatively prime but at least some of them. The number of streams is preferably $S = 1$.

Mode 3: Rate Dependent Choice of the Cyclic Delays

The cyclic delays are chosen depending on the code rate $R$. Particularly, cyclic delays are chosen such that the equivalent frequency domain channel will have $S$ different states given that the original channel was frequency flat. The value of $S$ is obtained from Fig. 5.

There are several possibilities for the cyclic delays in order to obtain a certain number $S$ of different channel states. For even numbers $n_T$ of transmit antennas, we recommend choosing the cyclic delays according to

$$\Delta_n = \frac{N_s}{S} + \Delta_{n-1} \qquad (15)$$

However, the condition

$$\Delta_n > \Delta_{n-1} + D \qquad (16)$$

where $D$ is the channel memory as defined above should be met.

The rate adaptation unit chooses the code rate depending on a criterion such as channel state or QoS. Depending on the code rate it chooses the smallest value of $S$ from Fig. 5, which is possible for the given number $n_T$ of transmit antennas. The cyclic delays are determined such that $S$ different channel states would result in a flat fading channel.

Optionally, the interleaving scheme is also modified such that the code bits are de-multiplexed into $S$ streams. Each stream performs optional interleaving according to the permutation rules $\Pi^{(s)}$. Then, the permuted bits are mapped on complex constellation elements of a digital modulation method such as QAM or PSK. Differential modulation is also possible in each stream.

The transmit symbols are mapped on sub-carriers by the sub-carrier assignment unit $\Pi_f$. This is done such that the symbols of a particular stream $s$ are assigned to sub-carriers, which would face the same channel state in a flat fading channel. This is accomplished as indicated in Fig. 9, where the symbols of the $S$ streams are assigned to $S$ neighbouring sub-carriers. Additional frequency interleaving of groups of size $S$ is possible.

The receiver is informed about the current code rate and the number of streams. Essentially, it is sufficient if the receiver is informed about the code rate $R$. From the code rate it can determine the cyclic delays from a look-up table, which is stored in the receiver. The receiver performs the reverse operation of the transmitter: After the FFT, a demapping unit demaps the received symbols to bits. Preferably, soft values, e.g. log-likelihood ratios are computed. These output values of the demapper are deinter-leaved in each of the $S$ streams. The $S$ streams are multiplexed and fed to the FEC decoder.

The capacity of cyclic delay diversity can be computed from the frequency domain representation (5) of the equivalent frequency-selective single-input multiple-output (SIMO) channel. We collect the channel coefficients of the SIMO channel for sub-carrier $d$ in the $n_r \times 1$ matrix

$$\tilde{H}_k(d) = \left[H_k^{(1)}(d), \ldots, H_k^{(n_R)}(d)\right]^T$$

and assume a sufficiently long guard interval of length $G \geq D$. Then, the capacity of cyclic delay diversity with no channel state information (CSI) at the transmitter but perfect CSI at the receiver for the channel realization $H_k$ is given by

$$C(H_k) = \frac{1}{N_s + G} \sum_{d=0}^{N_s-1} \log_2\left\{\det\left(I_{n_R} + \frac{E_s}{N_0 n_T}\tilde{H}_k(d)^H\right)\right\}.$$

Depending on the time variance of the channel, different capacity concepts are meaningful: In an ergodic channel, the capacity is given by

$$C = \mathcal{E}_{H_k}\{C(H_k)\}$$

where $\varepsilon_{H_k}$ denotes expectation with respect to $H_k$ This ergodic capacity implies that each codeword faces all possible channel states, i.e. a fast fading channel. The ergodic capacity i.e. loss suitable for the evaluation of spatial diversity techniques. The implicit time diversity provides already an infinite diversity level. Consequently, we do not see capacity advantages from additional spatial diversity. A more useful view in terms of diversity is outage capacity. This implies a slowly time varying channel, where each codeword faces only one channel state. More precisely, we use a quasistatic channel model, i.e. the channel is assumed to be constant during transmission of a block and changes independently from one block to the next. The x% outage capacity $C_x$ is the capacity, which is guaranteed in (100-x)% of the channel realizations, i.e. we expect an outage of x%.

The capacity implies Gaussian transmit symbols. How-ever, in real world systems, the transmit symbols will be taken from an M-QAM or M-PSK constellation. Taking this restriction on the transmit symbol alphabet into consideration, the capacity or mutual information, respectively, can be computed using the general formula for the conditional mutual information between the M-ary frequency domain transmit symbols $x(d) = [x_0(d), x_1(d), \ldots]$ and received symbols $y(d)$ for a particular realization $\tilde{H}_k$ of the effective frequency domain channel:

$$I\left(x, y|\tilde{H}_k\right) = \frac{1}{N_s + G} \sum_{d=0}^{N_s-1} \left[H\left(x(d)\right) - H\left(x(d)|y(d), \tilde{H}_k(d)\right)\right]$$

where $H(x)$ and $H(x|y, \tilde{H}_k)$ denote the entropy and the conditional entropy, respectively, and $y(d)$, $y(d)$ and $\tilde{H}_k(d)$ refer to the transmitted symbols, received symbols and the SIMO channel, respectively, for sub-carrier d.

The transmit symbols $x_t$ are assumed to be equally likely, i.e. the entropy is given by

$$H(x(d)) = \log_2 M.$$

The conditional entropy is obtained from

$$H\big(x(d)\big|y(d),\, \tilde{H}_k(d)\big) = -\mathcal{E}_{x_t(d),\, y(d)}\big\{p\big(x_t(d)\big|y(d),\, \tilde{H}_k(d)\big)\big\}$$

$$= \mathcal{E}_{x_t(d),\, y(d)}\left\{\log_2 \frac{\displaystyle\sum_{x_t(d)\in C} p\big(y(d)\big|x_t(d),\, \tilde{H}_k(d)\big)}{p\big(y(d)\big|x_t(d),\, \tilde{H}_k(d)\big)}\right\}$$

where $\varepsilon_{x_t(d),y(d)}$ denotes expectation with respect to $x_t(d)$ and $y(d)$ and

$$p\big(y\big|x_t,\, \tilde{H}_k\big) = \frac{1}{\big(2\pi\sigma^2\big)^{-n_R}}\exp\left(-\frac{\big\|y(d) - \tilde{H}_k(d)x_t(d)\big\|^2}{2\sigma^2}\right)$$

Similar as in the case of capacity for Gaussian transmit symbols, we can analyze the ergodic or outage mutual information.

Since modem wireless communication systems will use adaptive FEC coding and modulation, the code rates and modulation formats will be chosen adaptively, depending on criteria like current channel state or quality of service (QoS) requirements. The present invention provides, therefore, an adaptive cyclic delay diversity scheme, which uses the optimum cyclic delay according to e.g. a current code rate.

Furthermore, the inventive interleaving scheme can also be adapted in order to provide full spatial diversity.

The present invention further provides modes where cyclic delay may be chosen independently of the code rate such that the scheme is optimum in terms of capacity for all code rates.

In accordance with the present invention, cyclic delay is chosen depending on a code rate of the FEC code. The inventive scheme transforms the spatial diversity into frequency diversity between a minimum number of neighbouring sub-carriers, which is optimum for a current code rate. This will yield optimum FER performance in systems with adaptive coding using codes of limited constraint length.

The inventive cyclic delay diversity scheme enables exploiting spatial diversity in a coded OFDM system without increasing the receiver's complexity compared to a single antenna system. Moreover, guard interval need not to be exceeded. Furthermore, adaptive code rates are supported by adapting the cyclic delays to the chosen code rates such that the optimum cyclic delays for each code rate are chosen. Additionally, differential modulation in frequency domain is supported by the-proposed adaptive choice of the cyclic delays.

Moreover, depending on certain implementation requirements of the inventive methods, the inventive methods can be implemented in hardware or in software. The implementation can be performed using a digital storage medium, in particular a disk or a CD having electronically readable control signals stored thereon, which can cooperate with a programmable computer system such that the inventive methods are performed. Generally, the present invention is, therefore, a computer program product with a program code stored on a machine-readable carrier, the program code being configured for performing at least one of the inventive methods, when the computer program products runs on a computer. In other words, the inventive methods are, therefore, a computer program having a program code for performing the inventive methods, when the computer program runs on a computer.

## Claims

1. Apparatus for generating $n_T$ output sequences from an input sequence for obtaining cyclic delay diversity, the input sequence being a discrete-time sequence of samples of a multi-carrier signal, an output sequence to be transmitted via one of a plurality of transmit antennas, the apparatus comprising:

   - a copier (101) for generating $n_T$ copies of the input sequence, a first copy of the input sequence corresponding to a first output sequence, $n_T$ being equal to or greater than 3;
   - means for determining a number of values each copy of the input sequence is to be shifted by such that the capacity of the effective channel is increased when compared to another number of values; and
   - means (111) for cyclically shifting $n_T$-1 copies of the input sequence to obtain $n_T$-1 output sequences; wherein the means (111) for cyclically shifting is configured for cyclically shifting each copy of the $n_T$-1 copies of the input sequence by a different shift number from a set of shift numbers, each shift number in the set of shift numbers determining a different number of values a copy of the input sequence is to be cyclically shifted by, a shift number in the set of shift numbers being normalized to a sample spacing, wherein, according to a criterion, a smallest shift number in the set of shift numbers is greater than 1, and wherein a greatest common divisor dividing any two shift numbers in a set of shift numbers is equal to 1; and wherein
the means for determining is configured for determining a first set of shift numbers fulfilling the criterion in order to calculate a capacity of the effective channel resulting when using the shift numbers for obtaining cyclic delay diversity, wherein the means for determining is further configured for determining a further set of shift numbers in order to calculate a further capacity of a resulting effective channel and wherein the means for determining is further configured for comparing the capacity and the further capacity in order to determine which set of shift numbers is to be chosen to obtain an increased capacity.

2. Apparatus according to claim 1, wherein a first output sequence is the first copy of the input sequence or a shifted version thereof.

3. Apparatus according to claims 1 or 2, wherein the smallest number in the set of shift numbers is greater than or equal to 3;

4. Apparatus according to claim 1 to 3, wherein the numbers in the set of shift numbers are prime numbers.

5. Apparatus according to claims 1 to 4, wherein the $n_T$ output sequences are to be transmitted by $n_T$ transmitting points through a plurality of communication channels, wherein the $n_T$ communication channels represent an effective channel, wherein a capacity of the effective channel depends on a number of values a copy of the input sequence is to be shifted by, wherein
the apparatus further comprises means for determining a number of values a copy of the input sequences to be shifted by, the means for determining being configured for determining the number of values from a set of numbers of values, wherein a smallest number of values in the set of numbers of values is smaller or equal to 3, and wherein a greatest common divisor dividing any two numbers of values in the set of numbers of values is equal to 1, such that a capacity of the effective channel is increased.

6. Apparatus for generating an output sequence from $n_T$ input sequences for obtaining cyclic delay diversity, an input sequence to be received via one of a plurality of receive antennas and the output sequence being a discrete-time sequence of samples of a multi-carrier signal, the apparatus comprising:

means for determining a number of values each input sequence is to be shifted by such that the capacity of an effective channel is increased when compared to another number of values;
means for cyclically shifting $n_T$-1 input sequences to obtain cyclically shifted input sequences; and
an adder for adding the cyclically shifted input sequences and a version of a first input sequence to obtain the output sequence, wherein
the means for cyclically shifting is configured for cyclically shifting each copy of the $n_T$ input sequences by a different shift number from a set of shift numbers, each shift number in the set of shift numbers determining a different number of values an input sequence is to be cyclically shifted by, a shift number in the set of shift numbers being normalized to a sample spacing, wherein, according to a criterion, a smallest shift number in the set of shift numbers is greater than 1, and wherein a greatest common divisor dividing any two shift numbers in a set of shift numbers is equal to 1; and wherein
the means for determining is configured for determining a first set of shift numbers fulfilling the criterion in order to calculate a capacity of the effective channel resulting when using the shift numbers for obtaining cyclic delay diversity, wherein the means for determining is further configured for determining a further set of shift numbers in order to calculate a further capacity of a resulting effective channel and wherein the means for determining is further configured for comparing the capacity and the further capacity in order to determine which set of shift numbers is to be chosen to obtain an increased capacity.

7. Apparatus of claim 6, further comprising:

$n_T$ receiving points for providing the $n_T$ input sequences, each input sequence being a receivable version of a transmit sequence.

8. Method for generating $n_T$ output sequences from an input sequence for obtaining cyclic delay diversity, the input sequence being a discrete-time sequence of samples of a multi-carrier signal, an output sequence to be transmitted via one of a plurality of transmit antennas, the method comprising:

generating $n_T$ copies of the input sequence, $n_T$ being equal to or greater than 2;

determining a number of values each copy of the input sequence is to be shifted by such that the capacity of the effective channel is increased when compared to another number of values; and

cyclically shifting $n_T$-1 copies of the input sequence to obtain $n_T$-1 output sequences, wherein a first output sequence is a copy of the input sequence or a shifted version thereof; wherein

each copy of the input sequence is cyclically shifted by a different shift number from a set of shift numbers, each shift number in the set of shift numbers determining a different number of values, a copy of the input sequences to be shifted by, a shift number in the set of shift numbers being normalized to a sample spacing, wherein, according to a criterion, a smallest shift number in the set of shift numbers is greater than 1, and wherein a greatest common divisor dividing any two shift numbers in the set of shift numbers is equal to 1; and wherein

the step of determining comprises determining a first set of shift numbers fulfilling the criterion in order to calculate a capacity of the effective channel resulting when using the shift numbers for obtaining cyclic delay diversity, wherein the means for determining is further configured for determining a further set of shift numbers in order to calculate a further capacity of a resulting effective channel and wherein the means for determining is further configured for comparing the capacity and the further capacity in order to determine which set of shift numbers is to be chosen to obtain an increased capacity.

9. Method for generating an output sequence from $n_T$ input sequences for obtaining cyclic delay diversity, an input sequence to be received via one of a plurality of receive antennas and the output sequence being a discrete-time sequence of samples of a multi-carrier signal, the method comprising:

determining a number of values each input sequence is to be shifted by such that the capacity of an effective channel is increased when compared to another number of values;

cyclically shifting $n_T$-1 input sequences to obtain $n_T$-1 cyclically shifted input sequences; and

an adder for adding the cyclically shifted input sequences and a version of the first input sequence to obtain the output sequence, wherein

the step of cyclically shifting is configured for cyclically shifting each copy of the $n_T$ input sequences by a different shift number from a set of shift numbers, each shift number in the set of shift numbers determining a different number of values an input sequence is to be cyclically shifted by, a shift number in the set of shift numbers being normalized to a sample spacing, wherein, according to a criterion, a smallest shift number in the set of shift numbers is greater than 1, and wherein a greatest common divisor dividing any two shift numbers in a set of shift numbers is equal to 1; and wherein

the step of determining is configured for determining a first set of shift numbers fulfilling the criterion in order to calculate a capacity of the effective channel resulting when using the shift numbers for obtaining cyclic delay diversity, wherein the means for determining is further configured for determining a further set of shift numbers in order to calculate a further capacity of a resulting effective channel and wherein the means for determining is further configured for comparing the capacity and the further capacity in order to determine which set of shift numbers is to be chosen to obtain an increased capacity.

10. Method of claim 9, comprising:

receiving the $n_T$ input sequences using $n_T$ receiving points, each input sequence being a receivable version of a transmit sequence being receivable by a different receiving point.

11. Computer program for performing the method according to claim 8, claim 9 or claim 10, when the computer program runs on a computer.

**Patentansprüche**

1. Vorrichtung zum Erzeugen von $n_T$ Ausgabesequenzen aus einer Eingabesequenz zum Erhalten einer Zyklische-Verzögerung-Diversity, wobei die Eingabesequenz eine zeitdiskrete Sequenz von Abtastwerten eines Mehrträgersignals ist, wobei eine Ausgabesequenz über eine einer Mehrzahl von Sendeantennen zu senden ist, wobei die Vorrichtung folgende Merkmale aufweist:

- einen Kopierer (101) zum Erzeugen von $n_T$ Kopien der Eingabesequenz, wobei eine erste Kopie der Eingabesequenz einer ersten Ausgabesequenz entspricht, wobei $n_T$ gleich oder größer 3 ist;
- eine Einrichtung zum Bestimmen einer Anzahl von Werten, um die jede Kopie der Eingabesequenz zu verschieben ist, derart, dass die Kapazität des effektiven Kanals erhöht ist, wenn sie mit einer anderen Anzahl von Werten verglichen wird; und
- eine Einrichtung (111) zum zyklischen Verschieben von $n_T$-1 Kopien der Eingabesequenz, um $n_T$-1 Ausgabesequenzen zu erhalten; wobei

die Einrichtung (111) zum zyklischen Verschieben zum zyklischen Verschieben jeder Kopie der $n_T$-1 Kopien der Eingabesequenz um eine andere Verschiebungszahl aus einem Satz von Verschiebungszahlen konfiguriert ist, wobei jede Verschiebungszahl in dem Satz von Verschiebungszahlen eine andere Anzahl von Werten, um die eine Kopie der Eingabesequenz zyklisch zu verschieben ist, bestimmt, wobei eine Verschiebungszahl in dem Satz von Verschiebungszahlen auf eine Abtastwertbeabstandung normiert ist, wobei, gemäß einem Kriterium, eine kleinste Verschiebungszahl in dem Satz von Verschiebungszahlen größer 1 ist und wobei ein größter gemeinsamer Teiler, der beliebige zwei Verschiebungszahlen in einem Satz von Verschiebungszahlen teilt, gleich 1 ist; und wobei

die Einrichtung zum Bestimmen zum Bestimmen eines ersten Satzes von Verschiebungszahlen, die das Kriterium erfüllen, konfiguriert ist, um eine Kapazität des effektiven Kanals zu berechnen, der sich ergibt, wenn die Verschiebungszahlen zum Erhalten der Zyklische-Verzögerung-Diversity verwendet werden, wobei die Einrichtung zum Bestimmen ferner zum Bestimmen eines weiteren Satzes von Verschiebungszahlen konfiguriert ist, um eine weitere Kapazität eines sich ergebenden effektiven Kanals zu berechnen, und wobei die Einrichtung zum Bestimmen ferner zum Vergleichen der Kapazität und der weiteren Kapazität konfiguriert ist, um zu bestimmen, welcher Satz von Verschiebungszahlen auszuwählen ist, um eine erhöhte Kapazität zu erhalten.

2. Vorrichtung gemäß Anspruch 1, bei der eine erste Ausgabesequenz die erste Kopie der Eingabesequenz oder eine verschobene Version derselben ist.

3. Vorrichtung gemäß Anspruch 1 oder 2, bei der die kleinste Zahl in dem Satz von Verschiebungszahlen größer oder gleich 3 ist.

4. Vorrichtung gemäß Ansprüchen 1 bis 3, bei der die Zahlen in dem Satz von Verschiebungszahlen Primzahlen sind.

5. Vorrichtung gemäß Ansprüchen 1 bis 4, bei der die $n_T$ Ausgabesequenzen durch $n_T$ Sendepunkte durch eine Mehrzahl von Kommunikationskanälen zu senden sind, wobei die $n_T$ Kommunikationskanäle einen effektiven Kanal darstellen, wobei eine Kapazität des effektiven Kanals von einer Anzahl von Werten, um die eine Kopie der Eingabesequenz zu verschieben ist, abhängt, wobei

die Vorrichtung ferner eine Einrichtung zum Bestimmen einer Anzahl von Werten, um die eine Kopie der Eingabesequenz zu verschieben ist, aufweist, wobei die Einrichtung zum Bestimmen zum Bestimmen der Anzahl von Werten aus einem Satz von Anzahlen von Werten konfiguriert ist, wobei eine kleinste Anzahl von Werten in dem Satz von Anzahlen von Werten kleiner oder gleich 3 ist, und wobei ein größter gemeinsamer Teiler, der beliebige zwei Anzahlen von Werten in dem Satz von Anzahlen von Werten teilt, gleich 1 ist, derart, dass eine Kapazität des effektiven Kanals erhöht ist.

6. Vorrichtung zum Erzeugen einer Ausgabesequenz aus $n_T$ Eingabesequenzen zum Erhalten einer Zyklische-Verzögerung-Diversity, wobei eine Eingabesequenz über eine einer Mehrzahl von Empfangsantennen zu empfangen ist und die Ausgabesequenz eine zeitdiskrete Sequenz von Abtastwerten eines Mehrträgersignals ist, wobei die Vorrichtung folgende Merkmale aufweist:

eine Einrichtung zum Bestimmen einer Anzahl von Werten, um die jede Eingabesequenz zu verschieben ist, derart, dass die Kapazität eines effektiven Kanals erhöht ist, wenn sie mit einer anderen Anzahl von Werten verglichen wird;

eine Einrichtung zum zyklischen Verschieben von $n_T$-1 Eingabesequenzen, um zyklisch verschobene Eingabesequenzen zu erhalten; und

einen Addierer zum Addieren der zyklisch verschobenen Eingabesequenzen und einer Version einer ersten Eingabesequenz, um die Ausgabesequenz zu erhalten, wobei

die Einrichtung zum zyklischen Verschieben zum zyklischen Verschieben jeder Kopie der $n_T$ Eingabesequenzen um eine andere Verschiebungszahl aus einem Satz von Verschiebungszahlen konfiguriert ist, wobei jede Verschiebungszahl in dem Satz von Verschiebungszahlen eine andere Anzahl von Werten, um die eine Eingabesequenz zyklisch zu verschieben ist, bestimmt, wobei eine Verschiebungszahl in dem Satz von Verschiebungszahlen auf eine Abtastwertbeabstandung normiert ist, wobei, gemäß einem Kriterium, eine kleinste Verschiebungszahl in dem Satz von Verschiebungszahlen größer 1 ist und wobei ein größter gemeinsamer Teiler, der beliebige zwei Verschiebungszahlen in einem Satz von Verschiebungszahlen teilt, gleich 1 ist; und wobei die Einrichtung zum Bestimmen zum Bestimmen eines ersten Satzes von Verschiebungszahlen, die das Kriterium erfüllen, konfiguriert ist, um eine Kapazität des effektiven Kanals zu berechnen, der sich ergibt, wenn die Verschiebungszahlen zum Erhalten der Zyklische-Verzögerung-Diversity verwendet werden, wobei die Einrichtung zum Bestimmen ferner zum Bestimmen eines weiteren Satzes von Verschiebungszahlen konfiguriert ist, um eine weitere Kapazität eines sich ergebenden effektiven Kanals zu berechnen, und wobei die Einrichtung zum Bestimmen ferner zum Vergleichen der Kapazität und der weiteren Kapazität konfiguriert ist, um zu bestimmen, welcher Satz von Verschiebungszahlen auszuwählen ist, um eine erhöhte Kapazität zu erhalten.

**7.** Vorrichtung gemäß Anspruch 6, die ferner folgende Merkmale aufweist:

$n_T$ Empfangspunkte zum Bereitstellen der $n_T$ Eingabesequenzen, wobei jede Eingabesequenz eine empfangbare Version einer Sendesequenz ist.

**8.** Verfahren zum Erzeugen von $n_T$ Ausgabesequenzen aus einer Eingabesequenz zum Erhalten einer Zyklische-Verzögerung-Diversity, wobei die Eingabesequenz eine zeitdiskrete Sequenz von Abtastwerten eines Mehrträgersignals ist, wobei eine Ausgabesequenz über eine einer Mehrzahl von Sendeantennen zu senden ist, wobei das Verfahren folgende Schritte aufweist:

Erzeugen von $n_T$ Kopien der Eingabesequenz, wobei $n_T$ gleich oder größer als 2 ist;
Bestimmen einer Anzahl von Werten, um die jede Kopie der Eingabesequenz zu verschieben ist, derart, dass die Kapazität des effektiven Kanals erhöht ist, wenn sie mit einer anderen Anzahl von Werten verglichen wird; und
zyklisches Verschieben von $n_T$-1 Kopien der Eingabesequenz, um $n_T$-1 Ausgabesequenzen zu erhalten; wobei eine erste Ausgabesequenz eine Kopie der Eingabesequenz oder eine verschobene Version derselben ist; wobei
jede Kopie der Eingabesequenz um eine andere Verschiebungszahl aus einem Satz von Verschiebungszahlen zyklisch verschoben wird, wobei jede Verschiebungszahl in dem Satz von Verschiebungszahlen eine andere Anzahl von Werten bestimmt, um die eine Kopie der Eingabesequenzen zu verschieben ist, wobei eine Schiebeanzahl in dem Satz von Verschiebungszahlen auf eine Abtastwertbeabstandung normiert ist, wobei, gemäß einem Kriterium, eine kleinste Verschiebungszahl in dem Satz von Verschiebungszahlen größer 1 ist und wobei ein größter gemeinsamer Teiler, der beliebige zwei Verschiebungszahlen in dem Satz von Verschiebungszahlen teilt, gleich 1 ist; und wobei
der Schritt des Bestimmens ein Bestimmen eines ersten Satzes von Verschiebungszahlen aufweist, die das Kriterium erfüllen, um eine Kapazität des effektiven Kanals zu berechnen, der sich ergibt, wenn die Verschiebungszahlen zum Erhalten der Zyklische-Verzögerung-Diversity verwendet werden, wobei die Einrichtung zum Bestimmen ferner zum Bestimmen eines weiteren Satzes von Verschiebungszahlen konfiguriert ist, um eine weitere Kapazität eines sich ergebenden effektiven Kanals zu berechnen, und wobei die Einrichtung zum Bestimmen ferner zum Vergleichen der Kapazität und der weiteren Kapazität konfiguriert ist, um zu bestimmen, welcher Satz von Verschiebungszahlen auszuwählen ist, um eine erhöhte Kapazität zu erhalten.

**9.** Verfahren zum Erzeugen einer Ausgabesequenz aus $n_T$ Eingabesequenzen zum Erhalten einer Zyklische-Verzögerung-Diversity, wobei eine Eingabesequenz über eine einer Mehrzahl von Empfangsantennen zu empfangen ist und die Ausgabesequenz eine zeitdiskrete Sequenz von Abtastwerten eines Mehrträgersignals ist, wobei das Verfahren folgende Schritte aufweist:

Bestimmen einer Anzahl von Werten, um die jede Eingabesequenz zu verschieben ist, derart, dass die Kapazität eines effektiven Kanals erhöht ist, wenn sie mit einer anderen Anzahl von Werten verglichen wird;
zyklisches Verschieben der $n_T$-1 Eingabesequenzen, um $n_T$-1 zyklisch verschobene Eingabesequenzen zu erhalten; und
einen Addierer zum Addieren der zyklisch verschobenen Eingabesequenzen und einer Version der ersten Eingabesequenz, um die Ausgabesequenz zu erhalten, wobei
der Schritt des zyklischen Verschiebens zum zyklischen Verschieben jeder Kopie der $n_T$ Eingabesequenzen um eine andere Verschiebungszahl aus einem Satz von Verschiebungszahlen konfiguriert ist, wobei jede Verschiebungszahl in dem Satz von Verschiebungszahlen eine andere Anzahl von Werten bestimmt, um die eine Eingabesequenz zyklisch zu verschieben ist, wobei eine Verschiebungszahl in dem Satz von Verschiebungszahlen auf eine Abtastwertbeabstandung normiert ist, wobei, gemäß einem Kriterium, eine kleinste Verschiebungszahl in dem Satz von Verschiebungszahlen größer 1 ist und wobei ein größter gemeinsamer Teiler, der beliebige zwei Verschiebungszahlen in einem Satz von Verschiebungszahlen teilt, gleich 1 ist; und wobei der Schritt des Bestimmens zum Bestimmen eines ersten Satzes von Verschiebungszahlen, die das Kriterium erfüllen, konfiguriert ist, um eine Kapazität des effektiven Kanals zu berechnen, der sich ergibt, wenn die Verschiebungszahlen zum Erhalten der Zyklische-Verzögerung-Diversity verwendet werden, wobei die Einrichtung zum Bestimmen ferner zum Bestimmen eines weiteren Satzes von Verschiebungszahlen konfiguriert ist, um eine weitere Kapazität eines sich ergebenden effektiven Kanals zu berechnen und wobei die Einrichtung zum Bestimmen ferner zum Vergleichen der Kapazität und der weiteren Kapazität konfiguriert ist, um zu bestimmen, welcher Satz von Verschiebungszahlen auszuwählen ist, um eine erhöhte Kapazität zu erhalten.

10. Verfahren gemäß Anspruch 9, das folgende Schritte aufweist:

Empfangen der $n_T$ Eingabesequenzen unter Verwendung der $n_T$ Empfangspunkte, wobei jede Eingabesequenz eine empfangbare Version einer Sendesequenz ist, die durch einen anderen Empfangspunkt empfangbar ist.

11. Computerprogramm zum Durchführen des Verfahrens gemäß Anspruch 8, Anspruch 9 oder Anspruch 10, wenn das Computerprogramm auf einem Computer abläuft.

## Revendications

1. Appareil pour générer $n_T$ séquences de sortie à partir d'une séquence d'entrée, pour obtenir une diversité de retards cycliques, la séquence d'entrée étant une séquence dans le temps discret d'échantillons d'un signal à porteuses multiples, une séquence de sortie à transmettre par l'intermédiaire de l'une parmi une pluralité d'antennes de transmission, l'appareil comprenant:

- un copieur (101) destiné à générer $n_T$ copies de la séquence d'entrée, une première copie de la séquence d'entrée correspondant à une première séquence de sortie, $n_T$ étant égal ou supérieur à 3;
- un moyen destiné à déterminer un nombre de valeurs duquel doit être décalée chaque copie de la séquence d'entrée de sorte que la capacité du canal effectif soit augmentée, comparé à un autre nombre de valeurs; et
- un moyen (111) destiné à décaler cycliquement $n_T$-1 copies de la séquence d'entrée, pour obtenir $n_T$-1 séquences de sortie; dans lequel

le moyen (111) destiné à décaler cycliquement est configuré de manière à décaler cycliquement chaque copie des $n_T$-1 copies de la séquence d'entrée d'un nombre de décalage différent parmi un ensemble de nombres de décalage, chaque nombre de décalage dans l'ensemble de nombres de décalage déterminant un nombre de valeurs différent duquel doit être cycliquement décalé une copie de la séquence d'entrée, un nombre de décalage dans l'ensemble de nombres de décalage étant normalisé à un espacement d'échantillon, où, selon un critère, un nombre de décalage le plus petit dans l'ensemble de nombres de décalage est supérieur à 1, et où un diviseur commun le plus grand divisant deux nombres de décalage quelconques dans un ensemble de nombres de décalage est égal à 1; et dans lequel

le moyen destiné à déterminer est configuré de manière à déterminer un premier ensemble de nombres de décalage remplissant le critère, afin de calculer une capacité du canal effectif résultant lorsque sont utilisés les nombres de décalage, pour obtenir une diversité de retards cycliques, dans lequel le moyen destiné à déterminer est par ailleurs configuré de manière à déterminer un autre ensemble de nombres de décalage, pour calculer une autre capacité d'un canal effectif résultant et dans lequel le moyen destiné à déterminer est par ailleurs configuré de manière à comparer la capacité et l'autre capacité, pour déterminer l'ensemble de nombres de décalage qui doit être choisi pour obtenir une capacité augmentée.

2. Appareil selon la revendication 1, dans lequel une première séquence de sortie est la première copie de la séquence d'entrée ou d'une version décalée de cette dernière.

3. Appareil selon les revendications 1 ou 2, dans lequel le nombre le plus petit dans l'ensemble de nombres de décalage est supérieur ou égal à 3.

4. Appareil selon les revendications 1 à 3, dans lequel les nombres dans l'ensemble de nombres de décalage sont des nombres entiers.

**5.** Appareil selon les revendications 1 à 4, dans lequel les $n_T$ séquences de sortie doivent être transmises par $n_T$ points de transmission par l'intermédiaire d'une pluralité de canaux de transmission, où les $n_T$ canaux de transmission représentent un canal effectif, où une capacité du canal effectif dépend d'un nombre de valeurs duquel doit être décalée une copie de la séquence d'entrée, dans lequel

l'appareil comprend par ailleurs un moyen destiné à déterminer un nombre de valeurs duquel doit être décalée une copie de la séquence d'entrée, le moyen destiné à déterminer étant configuré de manière à déterminer le nombre de valeurs à partir d'un ensemble de nombres de valeurs, où un nombre de valeurs le plus petit dans l'ensemble de nombres de valeurs est inférieur ou égal à 3, et où un diviseur commun le plus grand divisant deux nombres de valeurs quelconques dans l'ensemble de nombres de valeurs est égal à 1, de sorte qu'une capacité du canal effectif soit augmentée.

**6.** Appareil pour générer une séquence de sortie à partir de $n_T$ séquences d'entrée, pour obtenir une diversité de retards cycliques, une séquence d'entrée à recevoir via l'une parmi une pluralité d'antennes de réception et la séquence de sortie étant une séquence dans le temps discret d'échantillons d'un signal à porteuses multiples, l'appareil comprenant:

un moyen destiné à déterminer un nombre de valeurs duquel doit être décalée chaque séquence d'entrée de sorte que la capacité d'un canal effectif soit augmentée, comparé à un autre nombre de valeurs;
un moyen destiné à décaler cycliquement $n_T$-1 séquences d'entrée, pour obtenir cycliquement des séquences d'entrée décalées; et
un additionneur destiné à additionner les séquences d'entrée décalées cycliquement et une version d'une première séquence d'entrée, pour obtenir la séquence de sortie, dans lequel
le moyen destiné à décaler cycliquement est configuré de manière à décaler cycliquement chaque copie des $n_T$ séquences d'entrée d'un nombre de décalage différent parmi un ensemble de nombres de décalage, chaque nombre de décalage dans l'ensemble de nombres de décalage déterminant un nombre de valeurs différent duquel doit être cycliquement décalée une séquence d'entrée, un nombre de décalage dans l'ensemble de nombres de décalage étant normalisé à un espacement d'échantillon, où, selon un critère, un nombre de décalage le plus petit dans l'ensemble de nombres de décalage est supérieur à 1, et où un diviseur commun le plus grand divisant deux nombres de décalage quelconques dans un ensemble de nombres de décalage est égal à 1; et dans lequel
le moyen destiné à déterminer est configuré de manière à déterminer un premier ensemble de nombres de décalage remplissant le critère pour calculer une capacité du canal effectif résultant lorsque sont utilisés les nombres de décalage, pour obtenir une diversité de retards cycliques, dans lequel le moyen destiné à déterminer est par ailleurs configuré de manière à déterminer un autre ensemble de nombres de décalage, pour calculer une autre capacité d'un canal effectif résultant et dans lequel le moyen destiné à déterminer est par ailleurs configuré de manière à comparer la capacité et l'autre capacité, pour déterminer l'ensemble de nombres de décalage qui doit être choisi pour obtenir une capacité augmentée.

**7.** Appareil selon la revendication 6, comprenant par ailleurs:

$n_T$ points de réception destinés à fournir les $n_T$ séquences d'entrée, chaque séquence d'entrée étant une version recevable d'une séquence de transmission.

**8.** Procédé pour générer $n_T$ séquences de sortie à partir d'une séquence d'entrée, pour obtenir une diversité de retards cycliques, la séquence d'entrée étant une séquence dans le temps discret d'échantillons d'un signal à porteuses multiples, une séquence de sortie à transmettre via l'une d'une pluralité d'antennes de transmission, le procédé comprenant:

générer $n_T$ copies de la séquence d'entrée, $n_T$ étant égal ou supérieur à 2;
déterminer un nombre de valeurs duquel doit être décalée chaque copie de la séquence d'entrée de sorte que la capacité du canal effectif soit augmentée, comparé à un autre nombre de valeurs; et
décaler cycliquement $n_T$-1 copies de la séquence d'entrée, pour obtenir $n_T$-1 séquences de sortie, où une première séquence de sortie est une copie de la séquence d'entrée ou une version décalée de cette dernière; dans lequel
chaque copie de la séquence d'entrée est cycliquement décalée d'un nombre de décalage différent parmi un ensemble de nombres de décalage, chaque nombre de décalage dans l'ensemble de nombres de décalage déterminant un nombre de valeurs différent, une copie des séquences d'entrée à décaler, un nombre de décalage dans l'ensemble de nombres de décalage étant normalisé à un espacement d'échantillon, où, selon un critère, un nombre de décalage le plus petit dans l'ensemble de nombres de décalage est supérieur à 1, et où un diviseur commun le plus grand divisant deux nombres de décalage quelconques dans l'ensemble de nombres de décalage est égal à 1; et dans lequel

l'étape de détermination comprend le fait de déterminer un premier ensemble de nombres de décalage remplissant le critère, pour calculer une capacité du canal effectif résultant lorsque sont utilisés les nombres de décalage, pour obtenir la diversité de retards cycliques, dans lequel le moyen destiné à déterminer est par ailleurs configuré de manière à déterminer un autre ensemble de nombres de décalage, pour calculer une autre capacité d'un canal effectif résultant et dans lequel le moyen destiné à déterminer est par ailleurs configuré de manière à comparer la capacité et l'autre capacité, pour déterminer l'ensemble de nombres de décalage qui doit être choisi pour obtenir une capacité augmentée.

9. Procédé pour générer une séquence de sortie à partir de $n_T$ séquences d'entrée, pour obtenir la diversité de retards cycliques, une séquence d'entrée à recevoir via l'une d'une pluralité d'antennes de réception et la séquence de sortie étant une séquence dans le temps discret d'échantillons d'un signal à porteuses multiples, le procédé comprenant:

déterminer un nombre de valeurs duquel doit être décalée chaque séquence d'entrée de sorte que la capacité d'un canal effectif soit augmentée, comparé à un autre nombre de valeurs;

décaler cycliquement $n_T$-1 séquences d'entrée, pour obtenir $n_T$-1 séquences d'entrée cycliquement décalées; et

un additionneur destiné à additionner les séquences d'entrée cycliquement décalées et une version de la première séquence d'entrée, pour obtenir la séquence de sortie, dans lequel

l'étape consistant à décaler cycliquement est configurée de manière à décaler cycliquement chaque copie des $n_T$ séquences d'entrée d'un nombre de décalage différent parmi un ensemble de nombres de décalage, chaque nombre de décalage dans l'ensemble de nombres de décalage déterminant un nombre de valeurs différent duquel doit être décalé cycliquement une séquence d'entrée, un nombre de décalage dans l'ensemble de nombres de décalage étant normalisé à un espacement d'échantillon, où, selon un critère, un nombre de décalage le plus petit dans l'ensemble de nombres de décalage est supérieur à 1, et où un diviseur commun le plus grand divisant deux nombres de décalage quelconques dans un ensemble de nombres de décalage est égal à 1; et dans lequel

l'étape consistant à déterminer est configurée de manière à déterminer un premier ensemble de nombres de décalage remplissant le critère, pour calculer une capacité du canal effectif résultant lorsque sont utilisés les nombres de décalage, pour obtenir la diversité de retards cycliques, dans lequel le moyen destiné à déterminer est par ailleurs configuré de manière à déterminer un autre ensemble de nombres de décalage, pour calculer une autre capacité d'un canal effectif résultant et dans lequel le moyen destiné à déterminer est par ailleurs configuré de manière à comparer la capacité et l'autre capacité, pour déterminer l'ensemble de nombres de décalage qui doit être choisi pour obtenir une capacité augmentée.

10. Procédé selon la revendication 9, comprenant:

recevoir les $n_T$ séquences d'entrée à l'aide des $n_T$ points de réception, chaque séquence d'entrée étant une version recevable d'une séquence de transmission recevable par un point de réception différent.

11. Programme d'ordinateur pour réaliser le procédé selon la revendication 8, la revendication 9 ou la revendication 10 lorsque le programme d'ordinateur est exécuté sur un ordinateur.

FIG. 1

| Type | $n_t$ | $\Delta A_t$ | $\Delta T_t$ |
|---|---|---|---|
| flat | 1 | – | – |
| uniform | D+1 | 0 dB | $T_S$ |
| 2 tabs exp | 2 | 3 dB | $DT_S$ |
| 12 tabs exp | 12 | 1 dB | $xT_S$ |

FIG. 2a

FIG. 2b

FIG. 2c

FIG. 3a

FIG. 3b

FIG. 4

EP 1 782 565 B1

| R | S |
|---|---|
| R ≤ 1/2 | 2 |
| R ≤ 3/4 | 4 |
| R ≤ 7/8 | 8 |
| R ≤ 15/16 | 16 |
| R ≤ 31/32 | 32 |

FIG. 5

EP 1 782 565 B1

$\widetilde{X}_3\widetilde{X}_2\widetilde{X}_1\widetilde{X}_0$

GI

$h_t^{(1)}$

FEC encoder

$\Pi$

Modulator

IFFT

$\Delta_2$

$\widetilde{X}_2\widetilde{X}_1\widetilde{X}_0\widetilde{X}_3$

GI

$h_t^{(2)}$

$\Delta_{nT}$

$\widetilde{X}_1\widetilde{X}_0\widetilde{X}_3\widetilde{X}_2$

GI

$h_t^{(n_T)}$

FIG. 6

GI

FFT

Demodulator

$\Pi^{-1}$

FEC decoder

FIG. 7

FIG. 8

FIG. 9

FIG. 10

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **A. DAMMANN ; S. KAISER.** Standard conformable antenna diversity techniques for OFDM systems and its application to the DVB-T system. *IEEE Globecom,* November 2001, 3100-3105
- **A. DAMMANN ; S. KAISER.** ow complex standard conformable antenna diversity techniques for OFDM systems and its application to the DVB-T system. *4th International ITG Conference on Source and Channel Coding,* January 2002, 253-259
- **A. DAMMANN ; R. RAULEFS ; S. KAISER.** Beamforming in combination with space-time diversity for broadband OFDM systems. *IEEE International Conference on Communications (ICC,* April 2002, 165-171
- **D. GORE ; S. SANDHU ; A. PAULRAJ.** Delay diversity codes for frequency selective channels. *International Conference on Communications (ICC,* April 2002, 1949-1953
- **A. HUEBNER et al.** On Space-Frequency Coding Using Cyclic Delay Diversity for OFDM-Based Transmission Systems. *European Transactions on Telecommunications, AEI,* November 2003, vol. 14 (6), 491-500
- **G. BAUCH ; J S. MALIK.** Orthogonal frequency division multiple access with cyclic delay diversity. *In ITG Workshop on Smart Antennas,* March 2004
- **G. BAUCH ; J S. MALIK.** Orthogonal frequency division multiple access with cyclic delay diversity. *ITG Workshop on Smart Antennas,* March 2004
- **G. BAUCH.** Multi-stream differential modulation for cyclic delay diversity in OFDM. *IEEE International Conference on Communications (ICC,* June 2004
- **G. AUER.** Channel estimation for OFDM with cyclic delay diversity. *IEEE International Symposium on Personal, Indoor and Mobile Radio Communications (PIMRC,* September 2004
- **G. BAUCH ; J.S. MALIK.** Parameter optimization, interleaving and multiple access in OFDM with cyclic delay diversity. *IEEE Vehicular Technology Conference (VTC,* May 2004
- **J.S. MALIK.** Cyclic delay diversity in OFDM, master thesis. *Department of Communications Engineering,* October 2003
- **G. BAUCH.** Higher order differential matrix modulation. *In IEEE International Symposium on Information Theory (ISIT,* June 2004